# EUROPEAN PATENT SPECIFICATION

(11) **EP 4 111 857 B1**
(45) Date of publication and mention of the grant of the patent: **06.05.2026**
(21) Application number: 22181573.1
(22) Date of filing: 28.06.2022
(51) Int. Cl.: A01K 47/06

(54) **BEEHIVE**
BIENENSTOCK
RUCHE

(30) Priority: 02.07.2021 IT 202100017531
(43) Date of publication of application: 04.01.2023
(73) Proprietor: Ecologia Viterbo S.p.A., 01100 Viterbo (VT) (IT)
(72) Inventor: PIETROPAOLI, Marco, 00075 Lanuvio (IT); LOMBARDI, Pierpaolo, 00142 ROMA (IT); CANZONIERO, Domenico, 40126 Bologna (IT)
(74) Representative: Lunati & Mazzoni S.r.L.

(56) References cited:
- CN-U- 211 910 139
- DE-C1- 4 018 251
- RU-C2- 2 640 283
- US-A- 212 828
- US-A- 4 007 504
- US-A1- 2020 267 945

## Description

The present invention has as its object a hive of the type specified in the preamble to the first claim.

More particularly, the present invention has as its object a hive suitable for the sheltering and biomonitoring of colonies of bees contained therein.

A similar hive is disclosed within patent application CN-U-211910139.

As is well known, the hive is an artificial shelter within which a colony of domestic bees, mainly Apis mellifera, live and where, as in the natural hive structure, the bees build the comb. These bees are then bred by a beekeeper in order to produce honey and derivatives including wax, poison, propolis.

The various types of hives that exist have very different structural characteristics depending on the beekeeper's needs. For example, beekeeping can be sedentary or nomadic and the beekeeper can be an entrepreneur or a hobbyist.

Hives are generally classified into two categories: traditional or rational. Traditional beehives have fixed panels woven from straw. They can also be made of wood or stone depending on the material available locally. These configurations involve the removal and cutting of combs to obtain honey, so that the bees have to rebuild the combs after harvesting. This type of hive is the oldest as straw has always been an easy material to find and weave and has excellent insulating and waterproof properties.

The rational hives, on the other hand, contain movable frames inside them that allow the honey to be extracted without destroying the nest. Today, in beekeeping, the rational hives are the main type used in beekeeping. These hives can have two modes of frame extraction: vertical or rear.

The most commonly used type is vertical extraction. The following is a description of a Langstroth-type hive, with subsequent modifications, in order to illustrate the essential constituents of this structure.

A hive generally consists of several parts that are assembled together, giving it a cubic or parallelepiped shape. It has a bottom, which can be raised from the ground by means of appropriate platforms, which represents the support base for the entire hive. This bottom was originally a solid panel firmly connected to the rest of the structure. The advent of the varroa mite made it necessary to replace the traditional bottom with a removable tray in order to control the possible presence of this ectoparasite in the hive. Above is the nest, made up of four wooden panels, generally fir in Italy, to house a few frames. They are made up of four wooden slats, of which the upper one is the longest, thus acting as a support for the whole frame, which can rest on the recesses at the front and back of the nest. The frame is 'reinforced' by passing a wire through it vertically and/or horizontally and at several points, on which the wax sheet is placed to aid the construction of the comb.

In addition, at the front of the hive, a small wooden door or metal grid is placed at the nest, which allows bees to enter and exit but precludes access to larger animals or insects.

Above the nest there may be a metal or plastic grid, called a queen excluder, with appropriately calibrated meshes to allow only worker bees to pass through and block the queen bee inside the nest. Then there is the shallow box, a box, generally made of fir wood, which also houses the frames that may not contain brood due to the presence of the queen excluder. It is usually lower in height than the nest and houses one less frame so as to allow for greater thickening of the combs and thus facilitate the uncapping operation.

A crown board, i.e. a slab preferably made of wood, is placed on the honeycomb and is used to keep the lid raised. The crown board has a hole generally used to feed the bees without opening the hive.

In conclusion, the lid generally has a metal sheet cover in order to provide greater protection from the weather.

The known technique described includes some major drawbacks.

In particular, the known hives of the state of the art hinder the movement of bees with respect to humans, since the doors for entering and exiting the nest are positioned at points in the hive in front of which the operator stands.

In addition, hives of the known technique are poorly ventilated, reducing the effective thermoregulation of the nest by the bees.

In addition, conventional hives, lacking openings at the bottom of the hive, do not allow the bees to efficiently clean certain parts of the interior of the hive or allow the bees to carry debris or any sick or dead bees outside efficiently.

In this situation, the technical task underlying the present invention is to devise a hive capable of substantially obviating at least part of the aforementioned drawbacks.

In the context of said technical task, it is an important aim of the invention to obtain a hive which allows to facilitate the entry and exit of bees from the nest avoiding that the path is obstructed by the operator.

Another important aim of the invention is to achieve a hive that allows at least the nest to be properly ventilated so as to increase the well-being of the bees inside the hive.

A further aim of the invention is to realise a hive in which the bees can perform the internal cleaning function efficiently and the operator can easily remove the debris produced.

In conclusion, a further aim of the invention is to realise a hive in which the state of the bees inside the hive, as well as of the environment inside and outside the hive, can be efficiently monitored.

The specified technical task and purposes are achieved by a hive as claimed in the appended claim 1.

Preferred technical solutions are highlighted in the dependent claims.

The features and advantages of the invention are hereinafter clarified by the detailed description of preferred embodiments of the invention, with reference to the appended drawings, in which:
the **Fig. 1** illustrates a perspective view of a hive according to the invention provided with supports for resting the hive on a ground;
the **Fig. 2** illustrates a partially exploded view of a hive according to the invention in which the pollen trap exiting the side slot is shown; and
the **Fig. 3** is a detail view of the second chamber and the common bottom of a hive according to the invention in which, in particular, the mesh membrane and the drawer are shown.

In the present document, the measurements, values, shapes and geometric references (such as perpendicularity and parallelism), when associated with words like "about" or other similar terms such as "approximately" or "substantially", are to be considered as except for measurement errors or inaccuracies due to production and/or manufacturing errors, and, above all, except for a slight divergence from the value, measurements, shape, or geometric reference with which it is associated. For instance, these terms, if associated with a value, preferably indicate a divergence of not more than 10% of the value.

Moreover, when used, terms such as "first", "second", "higher", "lower", "main" and "secondary" do not necessarily identify an order, a priority of relationship or a relative position, but can simply be used to clearly distinguish between their different components.

Unless otherwise specified, as results in the following discussions, terms such as "treatment", "computing", "determination", "calculation", or similar, refer to the action and/or processes of a computer or similar electronic calculation device that manipulates and/or transforms data represented as physical, such as electronic quantities of registers of a computer system and/or memories in, other data similarly represented as physical quantities within computer systems, registers or other storage, transmission or information displaying devices.

The measurements and data reported in this text are to be considered, unless otherwise indicated, as performed in the International Standard Atmosphere ICAO (ISO 2533:1975).

With reference to the Figures, the hive according to the invention is globally indicated by the number **1.**

The hive 1 is, as is known, a device for allowing at least the refreshment, or breeding, of bees.

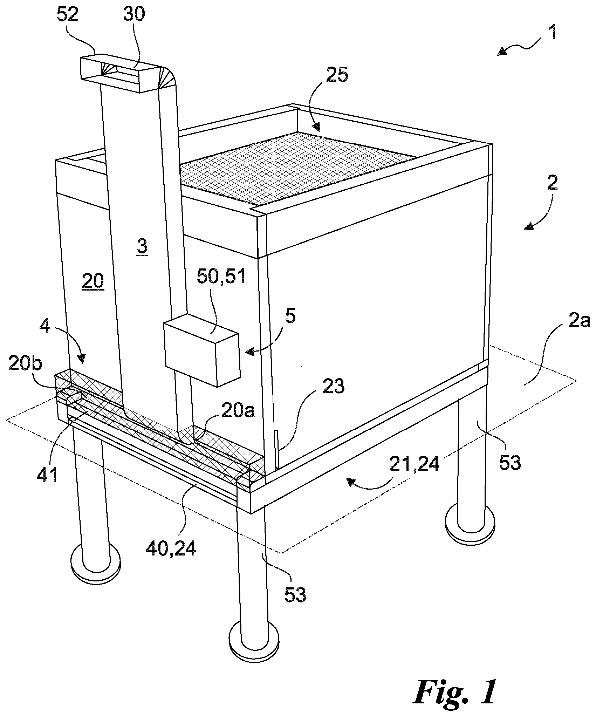

It may be placed on a ground or a plane, possibly supported by supporting bars or columns, for example as shown in Fig. 1.

Therefore, the following description takes into account the hive 1 as usually in use, i.e. when substantially fixed to the ground.

The hive 1 comprises at least a first chamber **2.**

The first chamber 2 is configured to house at least one honey comb. Thus, the first chamber 2 is substantially the chamber in which the queen bee is usually present and in which the frames on which the brood larvae and nutrients usable by the colony are primarily built are inserted.

Naturally, the first chamber 2 may be surmounted by a further shallow box chamber in which frames are positioned, instead, mainly intended to collect the honey made by the bees.

Generally, the shallow box chamber is separated from the chamber below, in this case from the first chamber 2, to prevent the queen bee from accessing the frames of the shallow box chamber and depositing eggs inside the honeycombs therein.

In any case, the first chamber 2 is delimited laterally by at least one first side wall **20.** The first side wall 20 may be, for example, a front wall of the first chamber 2. Furthermore, the first side wall 20 may be flat, or curved, and may be configured to close in a loop or to be connected with other adjacent side walls to laterally close the first chamber 2.

The first wall 20 comprises a first access **20a.**

The first access 20a for allowing bees to enter or exit the first chamber 2.

Further, the first wall 20 may further comprise a second access **20b.**

The second access 20b is also capable of allowing bees to access or escape from the first chamber 2.

The first chamber 2 is, therefore, also delimited by a first bottom wall **21.**

The first bottom wall 21 is substantially the portion of the first chamber 2 which, when the hive 1 is in use, is substantially facing the ground.

In particular, preferably, the bottom wall 21 extends along a bottom plane **2a.**

The bottom plane 2a is, therefore, apt to be arranged parallel to the ground when the hive 1 is in use.

In addition, the hive 1 comprises an access duct **3.**

The access duct 3 is nothing more than a tubular element extending along its own trajectory. The access duct 3 is, in detail, communicating with the first chamber 2.

In even greater detail, access duct 3 is communicating with the first chamber 2 via the first access 20a. In still further detail, the access duct 3 may be in fluid passage connection with the first chamber 2 through the first access 20a.

Thus, the access duct 3 essentially allows bees to be conveyed into or out of the first chamber 2.

The access duct 3 defines an entrance **30.**

The entrance 30 is a portion of the access duct 3 arranged in correspondence with a free end of the access duct 3. Therefore, the entrance 30 is positioned on the end of the access duct 3 opposite the end that interfaces with the first access 20a. Thus, the entrance 30 defines a passageway through which bees can disperse into or enter from an external environment.

The access duct 3 extends primarily transverse to the bottom plane 2a. Thus, the access duct 3 extends such that the entrance 30 is positioned above the first chamber 2 relative to the ground when the hive 1 is in use.

Thus, the access duct 3 allows the bees to comfortably enter and exit the first chamber 2 without crossing the operator during, for example, maintenance operations. According to the invention, the access duct 3 is extendable to any height and can be configured so that the entrance 30 rises above the ground at a greater height than the operator, for example at a height of 2 m.

Thus, the entrance 30 is extendable with respect to the ground. In other words, the portion of the access duct 3 ending with the entrance 30 can be extended to allow the distance between the inlet 30 and the ground to vary. This means, in other words, that in fact access duct 3 can vary its height. For example, in this regard, the access duct 3 may include telescopic components, or deformable elements capable of being stretched to increase the distance between the entrance 30 and the ground.

Furthermore, entrance 30 is articulated. By this, it is meant that the entrance can be oriented differently with respect to the rest of the body of the access duct 3 so that the direction of access to the access duct 3 by the bees can be varied.

Of course, the jointability of the entrance 30 can also be realised with deformable elements, for example accordion-like. Furthermore, structurally, the extendable portion of access duct 3 may correspond to the articulated portion. Especially but not only if the structure is accordion-shaped, as shown in Fig. 1, the access port 30 can be extended and articulated, varying its direction with respect to the ground, by the same means or the same structure.

The hive 1 may include further important arrangements.

For example, the hive 1 may further include a second chamber **4.**

The second chamber 4 does not correspond to the honeycomb chamber and is not positioned above the first chamber 2.

In fact, the second chamber 4 is laterally connected to the first chamber 2. In particular, the second chamber 4 can be positioned where the flight step of ordinary hives is usually located. Thus, for example, the second chamber 4 may be positioned at the front wall of the first chamber 2.

The second chamber 4 is, therefore, communicating with the first chamber 2 via the second access 20b through which the bees can pass from the first chamber 2 to the second chamber 4 and vice versa. Therefore, the bees have at their disposal, in addition to the first chamber 2 in which the nest is located, a second chamber 4 into which they can move without leaving the hive 1.

The second chamber 4 is, moreover, preferably delimited by a bottom wall**40.**

The bottom back wall 40 extends, like the first bottom wall 21, along the bottom plane 2a.

Even more in detail, preferably the second bottom wall 40 is in one piece with the first bottom wall 21. Thus, the bottom walls 21, 40 together make a common bottom **24** between the chambers 2, 4.

The common bottom 24 is nothing more than a single wall in which one portion delimits the second chamber 4 and corresponds to the second bottom wall 40 and the other portion delimits the first chamber 2 and corresponds to the first bottom wall 20.

The common bottom 24 may, advantageously, be characterised by further arrangements.

In fact, the common bottom 24 may be a simple single slab configured to inferiorly enclose the chambers 2, 4, or it may be subdivided into several portions.

For example, in a preferred embodiment, the common bottom 24 may include a mesh membrane **24a.**

The mesh membrane 24b extends, if present, along the bottom plane 2a. Thus, the mesh membrane 24b is configured to allow only residue and pollen produced or transported by said bees to pass through. In other words, the mesh membrane 24b acts as a filter by allowing debris or pollen to fall and escape from the first chamber 20 and the second chamber 40.

The mesh size of the mesh membrane 24a is larger than that of the common mesh used in the bottoms of conventional hives, so as to allow even large debris or pollen to pass through, but is still smaller than that of the body of the bees, preventing the latter from passing beyond the chambers 2,4.

Thus, the common bottom 24 may allow, if only provided with the mesh membrane 24a, for waste materials to fall to the ground.

Or, advantageously, the common bottom 24 may also comprise a drawer 4b.

If present, the drawer 24b extends parallel to the bottom plane 2a, i.e. parallel to the mesh membrane 24a.

Thus, the drawer 24b is arranged inferiorly to the mesh membrane 24a and configured to collect said residue and pollen.

Even more advantageously, the drawer 24b is removable with respect to the chambers 2, 4. Thus, the operator can remove only the drawer 24b to collect the debris exiting the chambers 2, 4 without having to open the hive 1 and without disturbing the activities of the bees.

As mentioned above, the second chamber 40 can be positioned in the area usually occupied by the step.

More in detail, preferably, the second chamber 4 is connected to the side wall 20, so that the second access 20b is also arranged on the side wall 20.

More specifically, preferably, the second access 20b is positioned between the first access 20a and the bottom plane 2a. Advantageously, the access duct 3 extends at least partially through the second chamber 4. This conformation makes it possible to make the structure of the hive 1 more compact while retaining all functionality.

The second chamber 4 can therefore be enclosed by closed walls. Or, preferably, the second chamber 4 can be at least partially enclosed by a mesh wall **41.**

The mesh wall 41 is substantially configured to allow only the passage of air and to obstruct the passage of bees. Thus, the mesh wall 41 allows at least the second chamber 4 to be ventilated, to which the bees may have access without allowing them to leave the hive.

The mesh wall 41 may delimit the second chamber 4 at the top, or the mesh wall 41 may correspond to upper walls and part of the side walls of the second chamber 4, as shown in Figs. 1-3.

The first chamber 2, in addition, may include other components.

For example, the first chamber 2 may include a guide **22.**

The guide 22, if present, extends internally to the first chamber 2 along the first side wall 20. Thus, preferably, the guide 22 is arranged at the side of the side wall 20 opposite the second chamber 4.

Furthermore, preferably, the guide 22 is configured to accommodate disposed adjacent to the accesses 20a, 20b a trap **22a.**

The trap 22a, in itself known, is substantially flat perforated and is therefore suitable for removing pollen from bees transiting therein.

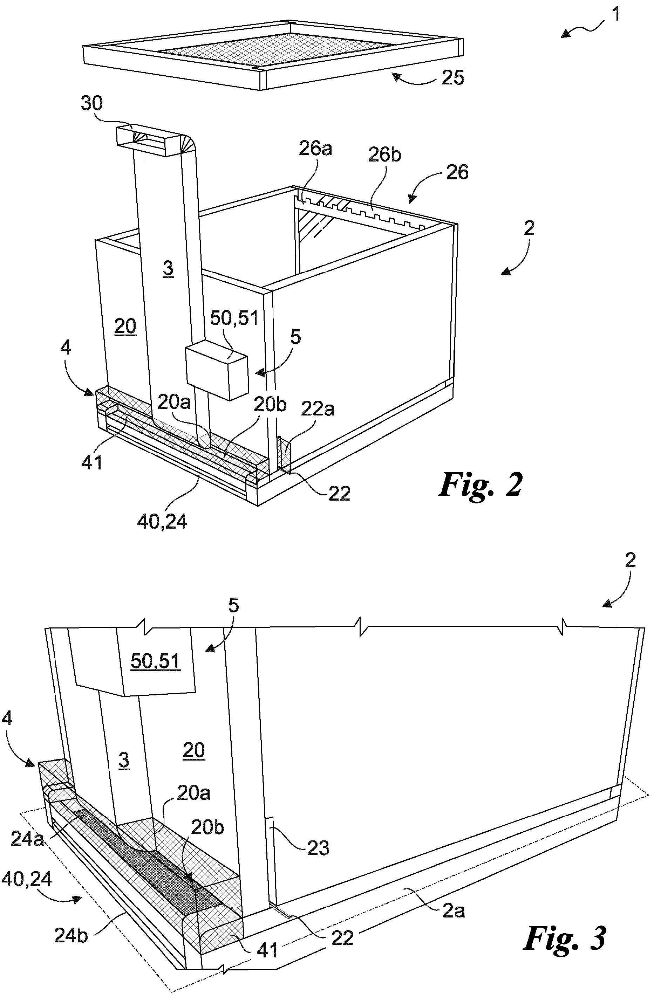

The guide 22 can therefore be fixed, or removable, as shown in Fig. 3, to facilitate for example the insertion and extraction operations of the trap 22a.

Thus, the first chamber 2 advantageously also comprises a slot **23.**

The slot 23 is substantially accessible from outside the first chamber 2.

Furthermore, the slot 23 is configured to allow access to the rail 22 from the outside in order to be able to extract the trap 22a from the guide 22 or insert the trap into the guide 22.

Thus, the drawer 24b can substantially be divided into three parts, possibly defining three mutually distinct compartments. The first part is to cover the area of the second bottom wall 40, i.e. for the collection of debris taken out of the first chamber 2 into the second chamber 4 by the bees, the second part in conjunction with the area of the slot 23 for the collection of pollen detached by the bees after passing through the trap 22a and the third part in conjunction with the area of the first bottom wall 21 for the collection of residue produced by the bees inside the hive.

The first chamber 2 may also include other elements. For example, the first chamber 2 may include an observation wall **26.**

The observation wall 26 may be a side wall, or an upper wall, or even a back wall.

Preferably, the observation wall 26 is opposite the side wall 20 and is therefore substantially a back wall of the first chamber 2.

Advantageously, if present, the observation wall 26 comprises a frame **26a.** The frame 26a is configured to support one or more sheets. In this respect, the frame 26a may be a frame provided with side guides within which sheets may be inserted or removed for sliding.

Furthermore, preferably, the observation wall 26 includes at least two transparent sheets **26b.**

The transparent sheets 26b are preferably rigid, for example made of plexiglass, and can be removed or inserted independently and selectively from the frame 26a.

Therefore, they are removably constrained to the frame 26a and configured to allow an operator to consult the interior of the first chamber 2.

The ability to selectively remove the transparent sheets 26b allows for easy control of the visibility obtainable with the observation wall 26.

The first chamber 2, in addition, may be delimited at the top by a mesh cover **25.**

The mesh cover 25, if present, is removably constrained at least to the side wall 20, more preferably to the side walls laterally delimiting the first chamber 2.

For example, the mesh cover 25 may include a magnetic frame, or provided with pins configured to allow engagement with the underside of the first chamber 2.

In addition, the mesh cover 25 is configured to allow inspection of the first chamber 2.

Thus, it may include a plurality of notches that are operable on command and configured to allow insertion or removal of objects from the first chamber 2. The cover 25, moreover, may comprise a further four side nets extending from the perimeter of the cover 25 consecutively to the first chamber 2 so as to prevent the passage of bees outside the first chamber 2. Such nets allow, through any other notches provided with plastic or rigid rubber flaps, the insertion or extraction of components or parts of the hive by the operator.

The notches essentially separate deformable flaps of the mesh cover 25 that can be deformed to open a slot through which, for example, the user's hands and/or the nest frames can be passed when in extraction.

In conclusion, the hive 1 could include monitoring means **5.**

The monitoring means 5, in general, are configured to detect one or more environmental parameters referred to the first chamber 2 and/or the second chamber 4 and/or the external environment.

They may therefore comprise one or more of the following sensors.

For example, the monitoring means 5 may include first sensors **50.**

The first sensors 50 are configured to detect and measure the presence of NH3 and/or Nox and/or Benzene and/or CO2.

Or, or additionally, the monitoring means 5 may include second sensors **51.** If present, the latter are preferably configured to detect and measure the temperature and humidity inside and/or outside the first chamber 2.

The monitoring means 5 may also comprise third sensors **52.**

The third sensors 52 are preferably positioned on the entrance 30. In addition, they are configured to detect the presence of rain or precipitation.

The monitoring means 5 may also comprise forth sensors **53.**

The quarter sensors 53, if present, are preferably positioned at least the first bottom wall 21. Thus, they are configured to measure the weight of the hive 1.

The forth sensors 53 may also include force transducers included within the supports of the hive 1 in such a way as to allow, at any instant, the weight force exerted on the support and, therefore, the weight of the hive 1 itself to be assessed.

Finally, the monitoring means 5 could also include an optical device.

The optical device, for example a remotely manageable camera, is preferably configured to capture images or video of the bees within the first chamber 2. Of course, the optical device may be positioned either inside or outside the first chamber 2.

The operation of the multifunctional hive 1 described above in structural terms is as follows.

Basically, the hive 1 has a similar operation to any hive of the known technique with some important differences. The path of entry and exit of the bees is determined by access duct 3. Moreover, the bees can move freely from the first chamber 2 to the second chamber 4 (as well as in the honeycomb chamber as far as bees other than the queen bee are concerned), without being able to leave the second chamber 4, which, in any case, ensures correct ventilation of chambers 2, 4.

The hive 1 according to the invention achieves important advantages. In fact, the hive 1 allows to facilitate the entry and exit of the bees from the nest, avoiding that the path is obstructed by the operator or that the operator is run over, during normal maintenance operations, by the bees.

In particular, the fact that the access duct, i.e. in detail the entrance 30, is according to the invention extendable and also articulated, makes it possible to completely control the path of passage of the bees with respect to the ground, and therefore with respect to the surrounding environment. This aspect becomes particularly important in urban environments where the hive can be positioned in areas where not only operators, but also ordinary citizens can pass in the vicinity of the hive itself.

Thus, the hive can be effectively positioned in urban environments and increases safety for all, humans and animals alike, as encounters between bees and citizens can be avoided by the total control of the positioning of the entrance 30 with respect to the ground.

Furthermore, in some preferred embodiments,
the hive 1 allows at least the nest to be properly ventilated, increasing the well-being of the bees present inside the hive itself, since the second chamber 4 which is connected to the first chamber 2 via the second access 20b can be provided with a mesh wall 41.

In some preferred embodiments, the hive 1 allows the operator to carry out normal maintenance operations easily and quickly, without disassembling all, or part, of the hive 1 itself. This is possible, for example, thanks to the guide 22 and the slot 23 through which it is accessed, which allow the trap 22a to be quickly removed for replacement or cleaning.

In some preferred embodiments, the hive 1 also allows efficient monitoring of the state of the bees inside the hive, as well as of the internal environment of the hive itself.

The monitoring is operable directly, by the operator, for example through the observation wall 26 and/or the mesh cover 25, or also automatically, remotely, via the monitoring means 5.

The invention is susceptible to variations within the scope of the invention as defined by the claims.

## Claims

1. Hive (1) comprising a first chamber (2) configured to house at least one honeycomb, laterally delimited by at least a first side wall (20) including at least a first access (20a) suitable for allowing said bees to access or exit from said first chamber (2) and inferiorly delimited by a first bottom wall (21) extending along a bottom plane (2a), and
- an access duct (3) communicating with said first chamber (2) through said first access (20a), defining an entrance (30) at a free end of said access duct (3) through which said bees can disperse into or enter from an external environment-and extending mainly transversely to said bottom plane (2a) so that said entrance (30) is positioned above said first chamber (2) with respect to a ground when said hive (1) is in use,
**characterized in that**
- said entrance (30) is articulated so as to allow to vary the direction of access to said access duct (3), and **in that** said access duct (3) is extendable with respect to the ground so that said entrance (30) is arranged be risen above the ground at a greater height than an operator maintaining said hive (1).

2. Hive (1) according to the preceding claim, further comprising a second chamber (4) connected laterally to said first chamber (2), inferiorly delimited by at least a second bottom wall (40) extending along said bottom plane (2a) and communicating with said first chamber (2) through a second access (20b) through which said bees can pass from said first chamber (2) to said second chamber (4) and vice versa.

3. Hive (1) according to claim 2, wherein said second bottom wall (40) is in one piece with said first bottom wall (21) so as to provide a common bottom (24) between said chambers (2, 4).

4. Hive (1) according to claim 3, wherein said common bottom (24) comprises:
- a mesh membrane (24a) extending along said bottom plane (2a) and configured to allow the passage of only debris and pollen produced or carried by said bees, and
- a drawer (24b) extending parallel to said bottom plane (2a) below said mesh membrane (24a), configured to collect said residue and pollen and extractable with respect to said chambers (2, 4).

5. Hive (1) according to any one of claims 2-4, wherein said second chamber (4) is connected to said side wall (20), said second access (20b) is arranged on said side wall (20) between said first access (20a) and said bottom plane (2a), and said access duct (3) extends at least in part through said second chamber (4).

6. Hive (1) according to any one of claims 2-5, wherein said second chamber (4) is at least partially delimited by a mesh wall (41) configured to only allow the passage of air and to obstruct the passage of said bees.

7. Hive (1) according to any one of the preceding claims, wherein said first chamber (2) comprises:
- a guide (22) extending inside said first chamber (2) along said first side wall (20) and configured to house behind said accesses (20a, 20b) a perforated flat trap (22a) suitable for removing pollen from said bees passing through it, and
- a slot (23) configured to allow access to said guide (22) from the outside for being able to extract said trap (22a) from or insert said trap (22a) into said guide (22).

8. Hive (1) according to any one of the preceding claims, wherein said first chamber (2) comprises an observation wall (26) comprising a frame (26a) configured to support one or more sheets and at least two transparent sheets (26b) removably constrained to said frame (26a) and configured to allow an operator to consult the inside of said first chamber (2).

9. Hive (1) according to any one of the preceding claims, wherein said first chamber (2) is superiorly delimited by a mesh cover (25) removably constrained to at least said first side wall (20), configured to allow the inspection of said first chamber (2) and including a plurality of notches that can be opened on command and configured to allow the insertion or extraction of objects from said first chamber (2).

10. Hive (1) according to any one of the preceding claims, further comprising monitoring means (5) configured to detect one or more environmental parameters referred to said first chamber (2) and/or said second chamber (4) and/or to the external environment and including one or more chosen from first sensors (50) configured to detect and measure the presence of NH3 and/or Nox and/or Benzene and/or CO2 inside said first chamber (2), second sensors (51) configured to detect and measure the temperature and humidity inside and/or outside said first chamber (2), third sensors (52) positioned on said entrance (30) and configured to detect the presence of rain, fourth sensors (53) positioned in correspondence with at least said first bottom wall (21) and configured to measure the weight of said hive (1) and an optical device configured to acquire images or videos of said bees within said first chamber (2).

## Patentansprüche

1. Bienenstock (1) umfassend eine erste Kammer (2), die dazu konfiguriert ist, mindestens eine Wabe aufzunehmen, die seitlich durch mindestens eine erste Seitenwand (20) begrenzt wird, die mindestens einen ersten Zugang (20a) umfasst, der geeignet ist, den Bienen zu ermöglichen, auf die erste Kammer (2) zuzugreifen oder aus dieser auszutreten, und die nach unten durch eine erste Bodenwand (21) begrenzt wird, die sich entlang einer Bodenebene (2a) erstreckt, und
- eine Zugangsleitung (3), die mit der ersten Kammer (2) durch den ersten Zugang (20a) in Kommunikation steht, die einen Eingang (30) an einem freien Ende der Zugangsleitung (3) definiert, durch den sich die Bienen in eine äußere Umgebung verbreiten oder aus dieser eintreten können und der sich im Wesentlichen quer zu der Bodenebene (2a) erstreckt, so dass der Eingang (30) über der ersten Kammer (2) in Bezug auf einen Boden positioniert ist, wenn der Bienenstock (1) in Gebrauch ist,
**dadurch gekennzeichnet, dass**
- der Eingang (30) gelenkig ausgebildet ist, um zu erlauben, die Zugangsrichtung zu der Zugangsleitung (3) zu ändern und dass die Zugangsleitung (3) in Bezug auf den Boden ausdehnbar ist, so dass der Eingang (30) eingerichtet ist, über den Boden an einer größeren Höhe als die eines Bedieners, der den Bienenstock hält, angehoben zu werden.

2. Bienenstock (1) nach dem vorhergehenden Anspruch, ferner umfassend eine zweite Kammer (4), die seitlich mit der ersten Kammer (2) verbunden ist, nach unten durch mindestens eine zweite Bodenwand (40) begrenzt wird, die sich entlang der Bodenebene (2a) erstreckt und mit der ersten Kammer (2) durch einen zweiten Zugang (20b) in Kommunikation steht, durch den die Bienen von der ersten Kammer (2) zu der zweiten Kammer (4) und umgekehrt gelangen können.

3. Bienenstock (1) nach Anspruch 2, wobei die zweite Bodenwand (40) einstückig mit der ersten Bodenwand (21) ausgebildet ist, so dass ein gemeinsamer Boden (24) zwischen den Kammern (2, 4) bereitgestellt wird.

4. Bienenstock (1) nach Anspruch 3, wobei der gemeinsame Boden (24) umfasst:
- eine Gittermembran (24a), die sich entlang der Bodenebene (2a) erstreckt und dazu konfiguriert ist, den Durchgang von Rückständen und Pollen, die von den Bienen erzeugt oder getragen werden, zu ermöglichen, und
- eine Schublade (24b), die sich parallel zu der Bodenebene (2a) unterhalb der Gittermembran (24a) erstreckt, die dazu konfiguriert ist, die Rückstände und Pollen zu sammeln, und die in Bezug auf die Kammern (2, 4) herausziehbar ist.

5. **.** Bienenstock (1) nach einem der Ansprüche 2 bis 4, wobei die zweite Kammer (4) mit der Seitenwand (20) verbunden ist, der zweite Zugang (20b) auf der Seitenwand (20) zwischen dem ersten Zugang (20a) und der Bodenebene (2a) angeordnet ist und die Zugangsleitung (3) sich mindestens teilweise durch die zweite Kammer (4) erstreckt.

6. **.** Bienenstock (1) nach einem der Ansprüche 2 bis 5, wobei die zweite Kammer (4) mindestens teilweise durch eine Gitterwand (41) begrenzt wird, die dazu konfiguriert ist, nur den Durchgang von Luft zu ermöglichen und den Durchgang der Bienen zu verhindern.

7. **.** Bienenstock (1) nach einem der vorhergehenden Ansprüche, wobei die erste Kammer (2) umfasst:
- eine Führung (22), die sich innerhalb der ersten Kammer (2) entlang der ersten Seitenwand (20) erstreckt und dazu konfiguriert ist, hinter den Zugängen (20a, 20b) eine perforierte flache Falle (22a) aufzunehmen, die geeignet ist, Pollen von den Bienen, die hindurchgehen, zu entfernen, und
- einen Schlitz (23), der dazu konfiguriert ist, den Zugang zu der Führung (22) von außen zu ermöglichen, um in der Lage zu sein, die Falle (22a) aus der Führung (22) herauszunehmen oder die Falle (22a) in die Führung (22) einzusetzen.

8. **.** Bienenstock (1) nach einem der vorhergehenden Ansprüche, wobei die erste Kammer (2) eine Beobachtungswand (26) umfasst, die einen Rahmen (26a) umfasst, der dazu konfiguriert ist, eine oder mehrere Platten zu stützen, und mindestens zwei transparente Platten (26b), die lösbar an dem Rahmen (26a) befestigt werden und dazu konfiguriert sind, einem Bediener zu erlauben, das Innere der ersten Kammer (2) zu prüfen.

9. **.** Bienenstock (1) nach einem der vorhergehenden Ansprüche, wobei die erste Kammer (2) nach oben durch einen Gitterdeckel (25) begrenzt wird, der an mindestens der ersten Seitenwand (20) lösbar befestigt wird, dazu konfiguriert ist, die Inspektion der ersten Kammer (2) zu erlauben, und eine Mehrzahl von Aussparungen umfasst, die auf Befehl geöffnet werden können und dazu konfiguriert sind, das Einführen oder das Herausnehmen von Gegenständen aus der ersten Kammer (2) zu ermöglichen.

10. **.** Bienenstock (1) nach einem der vorhergehenden Ansprüche, ferner umfassend Überwachungsmittel (5), die dazu konfiguriert sind, einen oder mehrere Umweltparameter zu erfassen, die sich auf die erste Kammer (2) und/oder die zweite Kammer (4) und/oder die äußere Umgebung beziehen, und die einen oder mehrere Sensoren umfassen, die aus ersten Sensoren (50), die dazu konfiguriert sind, die Anwesenheit von NH3 und/oder Nox und/oder Benzol und/oder CO2 innerhalb der ersten Kammer (2) zu erfassen und zu messen, zweiten Sensoren (51), die dazu konfiguriert sind, die Temperatur und Feuchtigkeit innerhalb und/oder außerhalb der ersten Kammer (2) zu erfassen und zu messen, dritten Sensoren (52), die an dem Eingang (30) positioniert sind und dazu konfiguriert sind, die Anwesenheit von Regen zu erfassen, vierten Sensoren (53), die an mindestens der ersten Bodenwand (21) positioniert sind und dazu konfiguriert sind, das Gewicht des Bienenstocks (1) zu messen, ausgewählt werden, sowie eine optische Vorrichtung, die dazu konfiguriert ist, Bilder oder Videos der Bienen innerhalb der ersten Kammer (2) zu erfassen.

## Revendications

1. Ruche (1) comprenant une première chambre (2) configurée pour loger au moins un rayon de miel, délimitée latéralement par au moins une première paroi latérale (20) comprenant au moins un premier accès (20a) adapté pour permettre auxdites abeilles d'accéder ou de sortir de ladite première chambre (2) et délimitée inférieurement par une première paroi de fond (21) s'étendant le long d'un plan de fond (2a), et
- un conduit d'accès (3) communiquant avec ladite première chambre (2) à travers ledit premier accès (20a), définissant une entrée (30) à une extrémité libre dudit conduit d'accès (3) à travers laquelle lesdites abeilles peuvent se disperser dans ou entrer depuis un environnement extérieur et s'étendant principalement transversalement audit plan de fond (2a) de sorte que ladite entrée (30) est positionnée au-dessus de ladite première chambre (2) par rapport au sol lorsque ladite ruche (1) est en utilisation,
**caractérisée en ce que**
- - ladite entrée (30) est articulée de manière à permettre de faire varier la direction d'accès au dit conduit d'accès (3) et **en ce que** le dit conduit d'accès (3) est extensible par rapport au sol de sorte que ladite entrée (30) est agencée pour être élevée au-dessus du sol à une hauteur supérieure à un opérateur maintenant ladite ruche

2. Ruche (1) selon la revendication précédente, comprenant en outre une deuxième chambre (4) reliée latéralement à ladite première chambre (2), délimitée inférieurement par au moins une deuxième paroi de fond (40) s'étendant le long dudit plan de fond (2a) et communiquant avec ladite première chambre (2) à travers un deuxième accès (20b) à travers lequel lesdites abeilles peuvent passer de ladite première chambre (2) à ladite deuxième chambre (4) et vice versa.

3. Ruche (1) selon la revendication 2, dans laquelle ladite deuxième paroi de fond (40) est en une seule pièce avec ladite première paroi de fond (21) de sorte à fournir un fond commun (24) entre lesdites chambres (2, 4).

4. Ruche (1) selon la revendication 3, dans laquelle ledit fond commun (24) comprend :
- une membrane en maille (24a) s'étendant le long dudit plan de fond (2a) et configurée pour permettre le passage uniquement de débris et de pollen produits ou transportés par lesdites abeilles, et
- un tiroir (24b) s'étendant parallèlement audit plan de fond (2a) au-dessous de ladite membrane en maille (24a), configuré pour collecter lesdits résidus et pollen et extractible par rapport auxdites chambres (2, 4).

5. Ruche (1) selon l'une quelconque des revendications 2-4, dans laquelle ladite deuxième chambre (4) est reliée à ladite paroi latérale (20), ledit deuxième accès (20b) est disposé sur ladite paroi latérale (20) entre ledit premier accès (20a) et ledit plan de fond (2a), et ledit conduit d'accès (3) s'étend au moins en partie à travers ladite deuxième chambre (4).

6. Ruche (1) selon l'une quelconque des revendications 2-5, dans laquelle ladite deuxième chambre (4) est au moins partiellement délimitée par une paroi en maille (41) configurée pour permettre uniquement le passage de l'air et pour empêcher le passage desdites abeilles.

7. Ruche (1) selon l'une quelconque des revendications précédentes, dans laquelle ladite première chambre (2) comprend :
- un guide (22) s'étendant à l'intérieur de ladite première chambre (2) le long de ladite première paroi latérale (20) et configuré pour loger derrière lesdits accès (20a, 20b) un piège plat perforé (22a) adapté pour enlever le pollen desdites abeilles passant à travers celui-ci, et
- une fente (23) configurée pour permettre l'accès audit guide (22) depuis l'extérieur pour pouvoir extraire ledit piège (22a) dudit guide (22) ou insérer ledit piège (22a) dans ledit guide (22).

8. Ruche (1) selon l'une quelconque des revendications précédentes, dans laquelle ladite première chambre (2) comprend une paroi d'observation (26) comprenant un cadre (26a) configuré pour supporter une ou plusieurs plaques et au moins deux plaques transparentes (26b) amoviblement fixées audit cadre (26a) et configurées pour permettre à un opérateur d'observer l'intérieur de ladite première chambre (2).

9. Ruche (1) selon l'une quelconque des revendications précédentes, dans laquelle ladite première chambre (2) est délimitée supérieurement par un couvercle en maille (25) amoviblement fixé à au moins ladite première paroi latérale (20), configuré pour permettre l'inspection de ladite première chambre (2) et comprenant une pluralité d'encoches pouvant être ouvertes sur commande et configurées pour permettre l'insertion ou l'extraction d'objets depuis ladite première chambre (2).

10. Ruche (1) selon l'une quelconque des revendications précédentes, comprenant en outre des moyens de surveillance (5) configurés pour détecter un ou plusieurs paramètres environnementaux relatifs à ladite première chambre (2) et/ou à ladite deuxième chambre (4) et/ou à l'environnement extérieur et comprenant un ou plusieurs capteurs choisis parmi des premiers capteurs (50) configurés pour détecter et mesurer la présence de NH3 et/ou Nox et/ou Benzène et/ou CO2 à l'intérieur de ladite première chambre (2), des deuxièmes capteurs (51) configurés pour détecter et mesurer la température et l'humidité à l'intérieur et/ou à l'extérieur de ladite première chambre (2), des troisièmes capteurs (52) positionnés sur ladite entrée (30) et configurés pour détecter la présence de pluie, des quatrièmes capteurs (53) positionnés en correspondance avec au moins ladite première paroi de fond (21) et configurés pour mesurer le poids de ladite ruche (1) et un dispositif optique configuré pour acquérir des images ou des vidéos desdites abeilles à l'intérieur de ladite première chambre (2).
